# EUROPEAN PATENT APPLICATION

(11) **EP 3 182 616 A1**
(43) Date of publication of application: **21.06.2017**
(21) Application number: 15307038.8
(22) Date of filing: 17.12.2015
(51) Int. Cl.: H04B 10/2575, H04J 14/02, H04Q 11/00

(54) **METHOD, DEVICES AND SYSTEM FOR ENDPOINT COMMUNICATION**

(71) Applicant: ALCATEL LUCENT, 92100 Boulogne-Billancourt (FR)
(72) Inventor: OBERLE, Karsten, 70435 Stuttgart (DE); KOZICKI, Bartek, B-2018 Antwerpen (BE); PFEIFFER, Thomas, 70435 Stuttgart (DE)
(74) Representative: Wetzel, Emmanuelle

(57) **Abstract**

A method for communication between two endpoints (300), (302) over an optical distribution network (314) where the endpoints are connected to the optical distribution network over optical network units (304), (306). These optical network units are connected to at least one optical routing element (312). The optical network units and the at least one optical routing element are controlled by an optical controller (310). The two endpoints are controlled by a wireless controller (308). A communication request between the two endpoints is created (400) by the wireless controller. The communication request is sent (402) from the wireless controller to the optical controller. Further the optical controller identifies (404) the optical network units connected to the two endpoints. The optical controller checks (406) if the optical network units belong to the same optical distribution network and configures (408) the optical network units to transmit and receive a first wavelength spectrum and the at least one optical routing element to route the first wavelength spectrum. The optical controller requests (410) the wireless controller to establish the communication between the two endpoints over the optical distribution network.

## Description

### TECHNICAL FIELD

This application is directed, in general, to optical networks and, more specifically, to systems, apparatus and methods for endpoint communication over optical access networks

### BACKGROUND

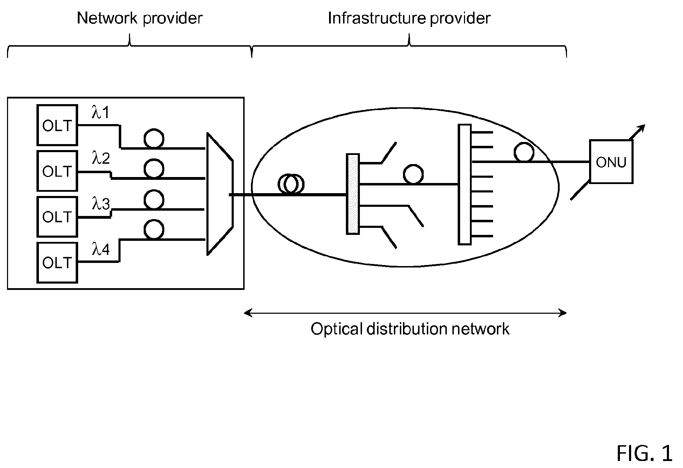

This invention applies to the field of optical networks, such as the optical access network, in which the fiber medium follows a tree topology. An example of the optical access network based on passive optical network (PON) is illustrated in Figure 1. It shows an architectural diagram of a PON implementation where in the central office location a network provider operates active network equipment consisting of four different OLTs operating at four different wavelengths λ1 - λ4 multiplexed to one fiber. The optical distribution network constitutes the domain of fiber infrastructure and is managed by an infrastructure provider who can be different from the network provider. Such a network facilitates the delivery of telecom services by providing connectivity between the central office and optical network unit (ONU) in a point to multipoint fashion. A PON can operate on one or more wavelengths to ensure enough communication capacity.

The point-to-multipoint connectivity is realized by the optical distribution network (ODN), owned and operated by the infrastructure provider. The ODN consists of the feeder fiber, optical power splitters and distribution fiber. The shared nature of the fiber medium is reflected in the operation of the PON system, where communication between the optical line terminations and the ONU is realized through time-multiplexing. The OLTs schedule communication to the multiplicity of ONUs per time slot per wavelength such that in any instant of time an OLT communicates with one ONU on a given wavelength with communication to other ONUs scheduled for subsequent time slots. In the opposite direction, the transmission from ONU to OLT is also scheduled by the OLT whenever the ONU indicates that it has data to send in the upstream direction. Moreover, the ONU is equipped with a tunable optical filter which allows it to receive optical signals on a single downstream wavelength at any given time and a tunable laser which allows it to communicate with the allocated OLT in the upstream direction. Upstream and downstream communication occurs over the same optical fiber on different wavelengths. The sharing of OLT and feeder fiber section allows keeping control of the per-end point cost of the PON system, while ensuring high peak throughput.

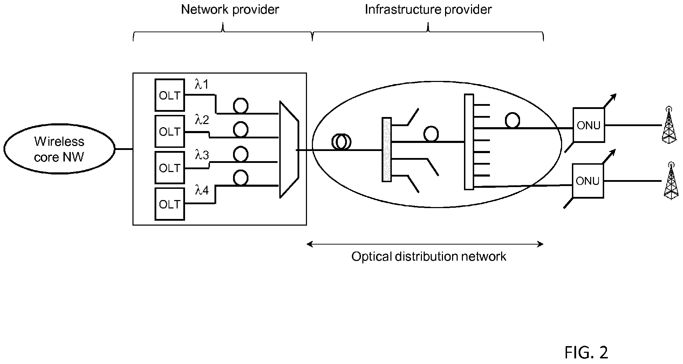

The time-scheduled operation of the PON system, which is well suited to residential broadband applications, poses a problem for communication services which require very low latency. By latency here we define the time between the moment that data is available for transmission and the moment when that data is delivered to its recipient. In a PON system a significant latency is incurred, especially in the upstream direction, where an ONU must request a transmission slot from the OLT upon receiving data for transmission. This can be detrimental to network operation and services, such as the transport service for mobile base station traffic, which leverages the broadband access capacity and connectivity of PON networks. More specifically, for traffic which originates and terminates in the same ODN, it is wasteful to traverse the entire PON system in the upstream and then in the downstream direction in order to provide the necessary end-to-end connection. An example is illustrated in Figure 2 where two wireless base stations communicate directly for the purpose of e.g. realizing advanced MIMO or interference cancellation functionality. A mechanism to provide static direct connectivity between endpoints (for example the wireless base station of Fig.2) for a single wavelength PON system has been described in EP2348787 A1.

Further two solutions exist for implementing the above-mentioned connectivity. These solutions apply to wireless base stations. In one of these solutions the PON network is traversed in upstream direction to reach the wireless core network and again it is traversed in downstream direction to reach the second base station. This solution has the disadvantage of high latency in both transmission directions. In the other solution direct fiber connectivity between the base stations is provided. This has the disadvantage of high installation and maintenance cost in addition to the already existing connectivity via the ODN.

### SUMMARY

It is an object of the present invention to obviate the above disadvantages and provide an advantageous direct communication between endpoints through an optical overlay through ODN on top of the TWDM-PON network.

According to one embodiment of the invention, a method for communication between two endpoints over an optical distribution network is proposed where the endpoints are connected to the optical distribution network over optical network units. These optical network units are connected to at least one optical routing element. The optical network units and the at least one optical routing element are controlled by an optical controller. The two endpoints are controlled by a wireless controller. A communication request between the two endpoints is created by the wireless controller. The communication request is sent from the wireless controller to the optical controller. Further the optical controller identifies the optical network units connected to the two endpoints. The optical controller checks if the optical network units belong to the same optical distribution network and configures the optical network units to transmit and receive a first wavelength spectrum and the at least one optical routing element to route the first wavelength spectrum. The optical controller requests the wireless controller to establish the communication between the two endpoints over the optical distribution network.

According to another embodiment of the invention, an optical controller for controlling a communication between two endpoints over an optical distribution network is proposed. The endpoints are connected to the optical distribution network over optical network units. These optical network units are connected to at least one optical routing element. The optical network units and the optical routing element are controlled by the optical controller and the two endpoints are controlled by a wireless controller. The network controller comprises an interface which is adapted to receive from the wireless controller a request for communication between the two endpoints. The optical controller also comprises a processor which is adapted to identify the optical network units connected to the two endpoints. The processor is also adapted to check if the optical network units belong to the same optical distribution network and configure over the interface the optical network units to transmit and receive a specific wavelength spectrum and the optical routing element to route the the specific wavelength spectrum. Finally the processor is adapted to request, over the interface, the wireless controller to establish the communication between the two endpoints over the optical distribution network.

According to a final embodiment of the invention, a communication system comprising two endpoints, an optical distribution network an optical controller and a wireless controller is proposed. The endpoints are connected to the optical distribution network over optical network units which in turn are connected to at least one optical routing element. The optical network units and the at least one optical routing element are controlled by the optical controller and the two endpoints are controlled by the wireless controller. The wireless controller is adapted to create a communication request between the two endpoints and send the request to the optical controller. The optical controller is adapted to identify the optical network units which are connected to the two endpoints, to check if the optical network units belong to the same optical distribution network and to configure these optical network units to transmit and receive a certain wavelength spectrum and the at least one optical routing element to route the certain wavelength spectrum. The optical controller is further adapted to request the wireless controller to establish the communication between the two endpoints over the optical distribution network.

Further advantageous features of the embodiments of the invention are defined and are described in the following detailed description.

### BRIEF DESCRIPTION OF THE DRAWINGS

Reference is made to the following description taken in conjunction with the accompanying drawings, in which:
Fig. 1 shows an example of the optical access network based on a passive optical network,
Fig. 2 shows two base stations connected to an ODN,
Fig. 3 shows an example implementation of the solution in a communication system,
Fig. 4 shows a flow diagram of the main method for communication between two endpoints over an optical distribution network,
Fig. 5 shows an optical controller according to the invention.

### DETAILED DESCRIPTION

Embodiments of methods, devices and systems are described herein for the communication between two endpoints over an optical distribution network.

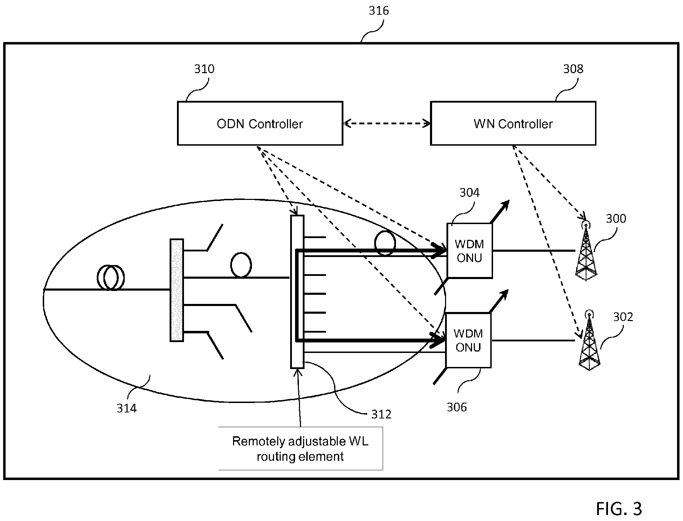

Figure 3 shows an example implementation of the solution in a communication system. In this communication system of Figure 3 two or more wireless base stations are connected to the ODN and communicate with a wireless core network through an OLT on a standard TWDM-PON wavelength and with each other via an overlay wavelength. The ONUs connected to each base station are enhanced with a transmitter and receiver which operate outside of the TWDM-PON or NG-PON2 wavelength spectrum. This spectrum is preferably in the range allocated for WDM transmission. For that reason we will further on refer to these ONUs as WDM ONUs.

The PON functionality of the WDM ONUs remains unchanged and is active in parallel with the WDM overlay functionality. The parallelism can be realized by splitting the optical input light at the WDM ONUs between the PON receiver and WDM receiver. Similarly the ONU laser and WDM laser are power-coupled at the optical interface of the WDM ONUs. The light from the source WDM ONU propagates upstream towards the optical routing element. In the optical routing element, the TWDM-PON wavelength is propagated further in the upstream direction towards the OLT, while the WDM wavelength is propagated downstream towards the destination WDM ONU. Such functionality can be realized by e.g. wavelength selective switches.

The control of the Wireless Network Controller, also referred to as Wireless Controller, and the overlay part of the WDM ONUs is performed by the ODN Controller, which can also be referred to as a ODN Overlay controller or Optical Controller. The ODN controller coordinates the WDM wavelength allocation between source and destination WDM ONU. Further the ODN controller may prevent wavelength collisions between multiple source and destination WDM ONUs. Also the ODN controller can configure the appropriate adjustable wavelength routing ODN element(s) to dynamically facilitate the connectivity between WDM ONUs.

In order to identify the connectivity matrix between the WDM ONUs, the ODN controller communicates with the wireless network controller which is the one to determine the required connections between the wireless base stations. The connection requests usually vary with time, therefore the communication between the ODN controller and the wireless network controller is a continuous process.

If the ODN involves more than one level of signal splitting the adjustable optical routing element will be deployed at each ODN splitting point. Alternatively, the first split point can include a broadband light reflector, reflecting WDM wavelengths back into the distribution section of the ODN, while passing the TWDM-PON wavelengths.

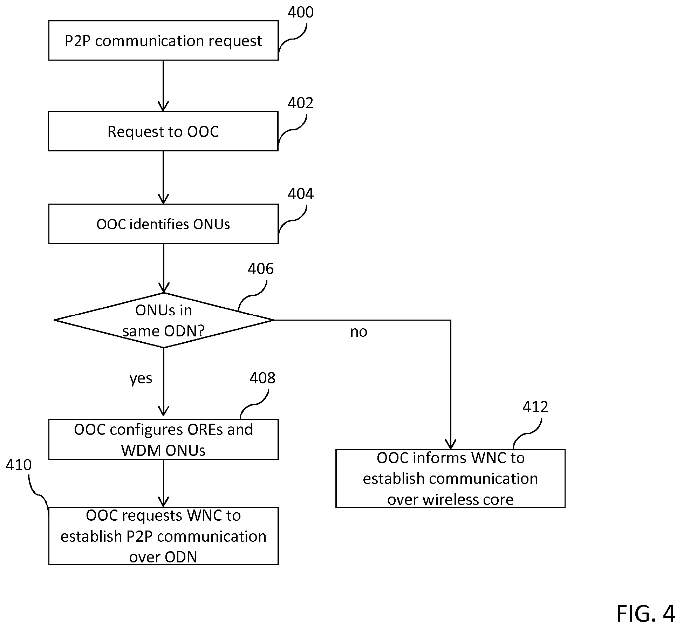

Figure 4 shows a flow diagram of the basic method for wavelength routing in an optical distribution network. The method starts in step 400 once a P2P communication request is created, e.g. from the Wireless Network Controller (WNC) to connect two wireless base stations. The request is forwarded in step 402 from the WNC to the ODN Overlay Controller (OOC). The OOC is aware of all the hosts connected to the Passive Optical Network and may thus in step 404 identify the endpoint WDN ONUs which are connected to the wireless base stations. In step 406 the OOC performs a check if the identified ONUs belong to the same ODN. If they belong to the same ODN then the OOC identifies the optical fiber sections and the Optical Routing Elements (OREs) which are needed to connect the concerned ONUs. This step is not shown in the flow diagram. If the identified ONUs do not belong to the same ODN then in step 412 the OOC informs the WNC to establish the communication between the wireless base stations over a wireless core connection.

After this procedure there are two checks performed which are not shown in the flow diagram for reasons of simplicity. In the first check it is checked if there are wavelengths available for being allocated to the specific communication request. If there are not then the OOC informs the WNC to establish the communication between the wireless base stations over a wireless connection in step 412 as above.

In case there is available wavelength then there is the second check performed in order to check if the available wavelength is supported by the ONUs which are concerned. If it is not supported then in step 412 the OOC informs the WNC to establish the communication between the wireless base stations over a wireless connection. If it is supported then in step 408 the OOC configures the OREs and WDM ONUs to the allocated wavelength. Finally in step 410 the OOC informs the WNC to establish the P2P communication between the wireless base stations over the ODN.

In order for the above steps to be performed the OOC is aware of the IP addresses of the wireless base stations. These addresses can be provided to the OOC by the WNC. Further the OOC keeps a mapping of the WDN ONUs and of the optical parts of the PON to which they are connected.

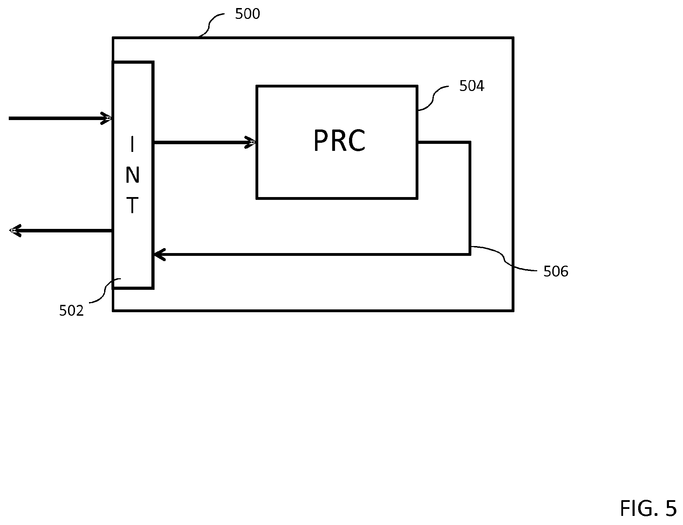

Figure 5 shows an optical controller according to the invention. The optical controller comprises an interface through which it can receive from the wireless controller a request for communication between the two wireless base stations. The optical controller also comprises a processor which after receiving the request for communication from the interface can identify the optical network units which are connected to the two wireless base stations. The processor may also check if the optical network units belong to the same optical distribution network. Further the processor can configure the optical network units to transmit and receive the appropriate wavelength spectrum and the optical routing element to route the appropriate wavelength spectrum. This configuration can be done over the interface. Finally the processor can request, over the interface, the wireless controller to establish the communication between the two endpoints over the optical distribution network.

The application of the solution described by this invention allows that a signal from a source WDM ONU to a destination WDM ONU does not have to undergo scheduling and traverse the whole PON system, meaning that the connectivity between the endpoints can be realized with latency only determined by the speed of light over the traversed section of the ODN. Also, the proposed solution does not require laying additional fiber for providing connectivity between endpoints as it allows re-using the ODN of the PON.

The above description and the accompanying figures merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended to aid the reader in understanding the principles of the invention and the concepts contributed by the inventors to furthering the art. They are thus to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for communication between two endpoints (300), (302) over an optical distribution network (314) the endpoints being connected to said optical distribution network over optical network units (304), (306) said optical network units being connected to at least one optical routing element (312) wherein the optical network units and the at least one optical routing element are controlled by an optical controller (310) and the two endpoints are controlled by a wireless controller (308), the method comprising the steps of
- a communication request between the two endpoints being created (400) from the wireless controller,
- the communication request being sent (402) from the wireless controller to the optical controller,
- the optical controller identifying (404) the optical network units connected to the two endpoints,
- the optical controller checking (406) if said optical network units belong to the same optical distribution network,
- the optical controller configuring (408) said optical network units to transmit and receive a first wavelength spectrum and the at least one optical routing element to route the first wavelength spectrum and
- the optical controller requesting (410) the wireless controller to establish the communication between the two endpoints over the optical distribution network.

2. The method according to claim 1, wherein said endpoints are wireless base stations.

3. The method according to claim 1, wherein said wireless controller is a wireless network controller.

4. The method according to claim 1, wherein said first wavelength spectrum is beyond a standard NG-PON2 wavelength spectrum.

5. The method according to claim 1, wherein if said optical network units do not belong to the same optical distribution network the optical controller requests the wireless controller to establish the communication between the two endpoints over a wireless mobile network over an optical line terminal.

6. The method according to claim 1, wherein the optical controller maintains an overview of hosts connected to a passive optical network containing the optical distribution network.

7. An optical controller (500) for controlling a communication between two endpoints over an optical distribution network the endpoints being connected to said optical distribution network over optical network units said optical network units being connected to at least one optical routing element wherein the optical network units and the at least one optical routing element are controlled by the optical controller and the two endpoints are controlled by a wireless controller, the network controller comprising an interface (502) adapted to receive from the wireless controller a request for communication between the two endpoints, the optical controller further comprising a processor (504) adapted to identify the optical network units connected to the two endpoints, check if said optical network units belong to the same optical distribution network, configure over said interface (502) the optical network units to transmit and receive a first wavelength spectrum and the at least one optical routing element to route the first wavelength spectrum, the processor (504) being finally adapted to request, over said interface (502), the wireless controller to establish the communication between the two endpoints over the optical distribution network.

8. The optical controller (500) of claim 7 wherein the optical controller is adapted to perform the method of any of the claims 1 - 6.

9. A communication system (316) comprising two endpoints (300), (302), an optical distribution network (314), an optical controller (310) and a wireless controller (308), the endpoints being connected to said optical distribution network over optical network units (304), (306), said optical network units being connected to at least one optical routing element (312) wherein the optical network units and the at least one optical routing element are controlled by the optical controller and the two endpoints are controlled by the wireless controller, wherein said wireless controller being adapted to create a communication request between the two endpoints and send the request to the optical controller, said optical controller being adapted to identify the optical network units connected to the two endpoints, to check if said optical network units belong to the same optical distribution network and to configure said optical network units to transmit and receive a first wavelength spectrum and the at least one optical routing element to route the first wavelength spectrum, said optical controller being further adapted to request the wireless controller to establish the communication between the two endpoints over the optical distribution network.

10. The communication system (316) of claim 9 wherein the communication system is adapted to perform the method of any of the claims 1 - 6.
